# EUROPÄISCHE PATENTANMELDUNG

(11) **EP 1 274 014 A2**
(43) Veröffentlichungstag der Anmeldung: **08.01.2003**
(21) Anmeldenummer: 02014788.0
(22) Anmeldetag: 04.07.2002
(51) Int. Cl.: G06F 11/36

(54) **Programmgesteuerte Einheit**

(30) Priorität: 06.07.2001 DE 10132313
(71) Anmelder: Infineon Technologies AG, 81669 München (DE)
(72) Erfinder: Mayer, Albrecht, Dr., 82041 Deisenhofen (DE)
(74) Vertreter: Repkow, Ines, Dr. Dipl.-Ing.

(57) **Zusammenfassung**

Es wird eine programmgesteuerte Einheit beschrieben, mit Debug-Ressourcen, durch welche ausgewählte Adressen, Daten, und/oder Steuersignale umfassende Trace-Informationen, mit Hilfe welcher sich der Verlauf der innerhalb der programmgesteuerten Einheit ablaufenden Vorgänge verfolgen läßt, aus der programmgesteuerten Einheit ausgegeben werden. Die beschriebene programmgesteuerte Einheit zeichnet sich dadurch aus,
- daß die Debug-Ressourcen überwachen, ob eine vorgegebene Veränderung des Pegels eines oder mehrerer vorgegebener Bits der von den Trace-Informationen umfaßten Adressen, Daten, und/oder Steuersignale erfolgt ist, und abhängig vom Ergebnis dieser Überprüfung die Generierung von Trace-Informationen starten oder beenden, und/oder
- daß die ausgegebenen Trace-Informationen Bestandteil von Messages sind, bei welchen die Länge des die Trace-Informationen enthaltenden Teils variabel ist, und/oder
- daß die ausgegebenen Trace-Informationen Bestandteil von Messages sind, wobei es einstellbar ist, welche Trace-Information an welcher Stelle innerhalb der Message zu stehen kommt.

## Beschreibung

Die vorliegende Erfindung betrifft eine Vorrichtung gemäß den Oberbegriffen der Patentansprüche 1, 2 und 3, d.h. eine programmgesteuerte Einheit, mit Debug-Ressourcen, durch welche ausgewählte Adressen, Daten, und/oder Steuersignale umfassende Trace-Informationen, mit Hilfe welcher sich der Verlauf der innerhalb der programmgesteuerten Einheit ablaufenden Vorgänge verfolgen läßt, aus der programmgesteuerten Einheit ausgegeben werden.

Programmgesteuerte Einheiten wie Mikroprozessoren, Mikrocontroller, Signalprozessoren etc. sind seit vielen Jahren in unzähligen Ausführungsformen bekannt.

Ein bekanntes Problem von programmgesteuerten Einheiten besteht darin, daß darin auftretende Fehler häufig nicht ohne weiteres lokalisierbar und/oder behebbar sind.

Die Lokalisierung und Behebung von in programmgesteuerten Einheiten auftretenden Fehlern erfolgte früher und teilweise auch jetzt noch unter Verwendung spezieller Bond-Out-Versionen der zu untersuchenden programmgesteuerten Einheiten. Bond-Out-Versionen von programmgesteuerten Einheiten unterscheiden sich von den in Massenprodukten eingesetzten Standard-Versionen der betreffenden programmgesteuerten Einheiten dadurch, daß sie mehr Ein- und/oder Ausgabeanschlüsse aufweisen, wobei die zusätzlichen Ein- und/oder Ausgabeanschlüsse mit in der Standard-Version der programmgesteuerten Einheit nicht frei zugänglichen Stellen der programmgesteuerten Einheit verbunden sind. Dadurch können Informationen über interne Zustände oder Vorgänge, genauer gesagt über normalerweise nicht ausgegebene Informationen wie beispielsweise der jeweils aktuelle Stand des Program Counter bzw. Instruction Pointer, aus der programmgesteuerten Einheit ausgegeben und außerhalb der programmgesteuerten Einheit ausgewertet werden. Durch die Auswertung dieser Informationen läßt sich der Verlauf der innerhalb der programmgesteuerten Einheit ablaufenden Vorgänge verfolgen, wodurch in der programmgesteuerten Einheit auftretende Fehler lokalisiert und behoben werden können.

Die Verwendung von Bond-Out-Versionen ist jedoch mit einer Reihe von Nachteilen verbunden. Insbesondere sind die Bond-Out-Versionen von programmgesteuerten Einheiten größer und teurer als die Standard-Versionen, und, was noch wichtiger ist, verhalten sich die Bond-Out-Versionen in der Regel nicht exakt so wie die Standard-Versionen.

Man ist daher teilweise dazu übergegangen, programmgesteuerte Einheiten mit Debug-Ressourcen auszustatten, welche aus der programmgesteuerten Einheit zur Fehlerlokalisierung und Fehlerbehebung benötigte Informationen extrahieren und über eine nur wenige Pins umfassende und teilweise auch für andere Zwecke benutzbare Schnittstelle aus der programmgesteuerten Einheit ausgeben oder in dieser speichern.

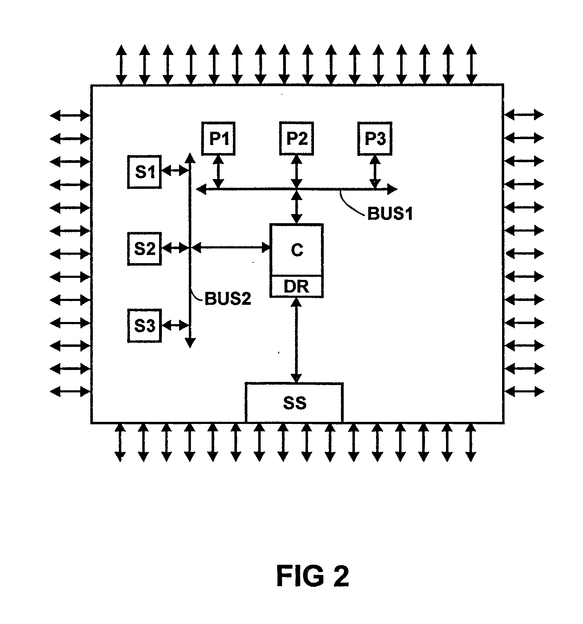

Eine solche programmgesteuerte Einheit ist in Figur 2 dargestellt.

Die in der Figur 2 gezeigte programmgesteuerte Einheit ist ein Mikrocontroller und enthält einen Core C, über einen ersten Bus BUS1 mit dem Core C verbundene Peripherieeinheiten P1, P2, P3, über einen zweiten Bus BUS2 mit dem Core C verbundene Speichereinrichtungen S1, S2, S3, mit dem Core C in Verbindung stehende Debug-Ressourcen DR, und eine den Debug-Ressourcen DR zugeordnete Schnittstelle SS, über welche die Debug-Ressourcen DR an eine externe Einrichtung auszugebende Daten ausgeben, und über welche die Debug-Ressourcen DR von der externen Einrichtung gesteuert werden.

Die Peripherieeinheiten P1 bis P3 sind beispielsweise ein A/D-Wandler, ein Timer, ein Codierer, eine Komprimierungseinrichtung, eine CAN-Schnittstelle, oder sonstige in Mikrocontroller integrierbare Einheiten; die Speichereinrichtungen sind beispielsweise ein RAM, ein ROM, und ein Flash-Speicher.

Die Debug-Ressourcen DR sind vorzugsweise in der Lage, sogenannte Trace-Informationen auszugeben. Dies geschieht im allgemeinen dadurch, daß durch die Debug-Ressourcen DR überwacht wird, ob der Program Counter oder eine Adresse, auf die gerade zugegriffen wird, einen bestimmten Wert hat oder innerhalb eines bestimmten Wertebereiches liegt, und jedesmal, wenn dies der Fall ist, ohne eine Unterbrechung des Betriebes der programmgesteuerten Einheit der aktuelle Stand des Program Counter und/oder die Adresse, auf die gerade zugegriffen wird, und/oder die zu oder von dieser Adresse transferierten Daten aus der programmgesteuerten Einheit ausgegeben werden.

Im allgemeinen führen die Debug-Ressourcen DR darüber hinaus auch noch weitere Aktionen aus, die für die Lokalisierung und Behebung von in der programmgesteuerten Einheit auftretenden Fehlern notwendig oder hilfreich sind. So sind die Debug-Ressourcen DR beispielsweise häufig in der Lage, beim Auftreten bestimmter Bedingungen, beispielsweise bei Erreichen eines bestimmten Program-Counter-Standes
- ein diesen Umstand signalisierendes Signal aus der programmgesteuerten Einheit auszugeben, und/oder
- die programmgesteuerte Einheit anzuhalten und die Inhalte von interessierenden Registern auszulesen oder zu verändern.

Solche, auch als OCDS-Module bezeichneten Debug-Ressourcen sind bekannt, so daß auf die Beschreibung weiterer Einzelheiten verzichtet wird.

Aufgrund der zunehmenden Bedeutung des Vorsehens von Debug Ressourcen in programmgesteuerten Einheiten wurde von der IEEE Industry Standards and Technology Organization (IEEE-ISTO) in 1999 ein als "The Nexus 5001 Forum Standard for a Global Embedded Processor Debug Interface" bezeichneter Standard für das Interface (die Schnittstelle SS) definiert, über welches die Debug-Ressourcen mit einer außerhalb der programmgesteuerten Einheit vorgesehenen Einrichtung, beispielsweise mit einer Debug- oder Emulations-steuereinheit, oder mit einem Meßgerät wie etwa einem Logikanalysator auf besonders effiziente Art und Weise Daten austauschen können.

Die Debug-Ressourcen und das NEXUS-Interface ermöglichen es, mit einem verhältnismäßig geringen Aufwand, in programmgesteuerten Einheiten auftretende Fehler zu erkennen und zu beheben.

Nichtsdestotrotz stellt es häufig ein großen Problem dar, Trace-Informationen aus der programmgesteuerten Einheit auszugeben. Einerseits sollen die Trace-Informationen nämlich möglichst viele Daten umfassen, damit die in der programmgesteuerten Einheit ablaufenden Vorgänge einfach, schnell, und genau nachvollzogen werden können. Andererseits sollen die Trace-Informationen einen möglichst geringen Umfang aufweisen, damit sie über möglichst wenige Pins der programmgesteuerte Einheit aus dieser ausgegeben werden können, denn jeder zusätzlich Pin hat zur Folge, daß die programmgesteuerte Einheit größer und teurer wird.

Der vorliegenden Erfindung liegt daher die Aufgabe zugrunde, eine Möglichkeit zu finden, durch welche zur Beobachtung der innerhalb der programmgesteuerten Einheit ablaufenden Vorgänge benötigte Trace-Informationen mit geringem Aufwand umfassend aus der programmgesteuerten Einheit ausgegeben werden können.

Diese Aufgabe wird erfindungsgemäß durch die in den Patentansprüchen 1, 2, und 3 beanspruchten programmgesteuerten Einheiten gelöst.

Die erfindungsgemäße programmgesteuerte Einheit zeichnet sich dadurch aus,
- daß die Debug-Ressourcen überwachen, ob eine vorgegebene Veränderung des Pegels eines oder mehrerer vorgegebener Bits der von den Trace-Informationen umfaßten Adressen, Daten, und/oder Steuersignale erfolgt ist, und abhängig vom Ergebnis dieser Überprüfung die Generierung von Trace-Informationen starten oder beenden, und/oder
- daß die ausgegebenen Trace-Informationen Bestandteil von Messages sind, bei welchen die Länge des die Trace-Informationen enthaltenden Teils variabel ist, und/oder
- daß die ausgegebenen Trace-Informationen Bestandteil von Messages sind, wobei es einstellbar ist, welche Trace-Information an welcher Stelle innerhalb der Message zu stehen kommt.

Durch die genannten Maßnahmen kann erreicht werden, daß nur wirklich benötigte Trace-Informationen, und mithin auch nur die unbedingt erforderliche Menge an Trace-Informationen aus der programmgesteuerten Einheit ausgegeben wird. Damit ist der Umfang der ausgegebenen Trace-Informationen auch dann, wenn diese viele Adressen, Daten, und/oder Steuersignale umfassen, verhältnismäßig gering.

Vorteilhafte Weiterbildungen der Erfindung sind den Unteransprüchen, der folgenden Beschreibung und den Figuren entnehmbar.

Die Erfindung wird nachfolgend anhand von Ausführungsbeispielen unter Bezugnahme auf die Figuren näher erläutert. Es zeigen
Figur 1 den Aufbau der im folgenden näher beschriebenen programmgesteuerten Einheit, und
Figur 2 den Aufbau der eingangs beschriebenen herkömmlichen programmgesteuerten Einheit.

Bei der im folgenden beschriebenen programmgesteuerten Einheit handelt es sich um einen Mikrocontroller. Die nachfolgend beschriebenen Besonderheiten des Mikrocontrollers, genauer gesagt die nachfolgend beschriebenen Besonderheiten der darin vorgesehenen Debug-Ressourcen lassen sich jedoch auch bei beliebigen anderen programmgesteuerten Einheiten einsetzen.

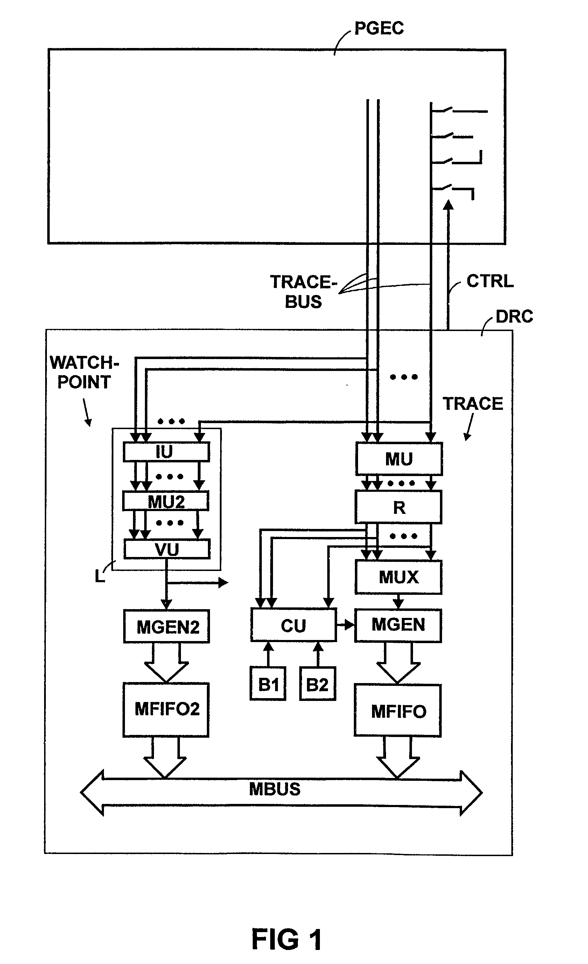

Die im folgenden beschriebene programmgesteuerte Einheit ist schematisch in Figur 1 dargestellt. Der Vollständigkeit halber sei darauf hingewiesen, daß nur die vorliegend besonders interessierenden Komponenten der programmgesteuerten Einheit gezeigt sind und beschrieben werden.

Die in der Figur 1 gezeigte programmgesteuerte Einheit enthält Debug-Ressourcen DRC und durch einen Block PGEC bezeichnete weitere Komponenten der programmgesteuerten Einheit.

Die Komponenten PGEC umfassen alle Komponenten der programmgesteuerten Einheit mit Ausnahme der Debug-Ressourcen DRC. Zu diesen Komponenten gehören der Core, Speichereinrichtungen, Peripherieeinheiten und sonstige Komponenten der programmgesteuerten Einheit.

Die Debug-Ressourcen DRC und die Komponenten PGEC sind über einen Bus TRACEBUS und Steuerleitungen CTRL miteinander verbunden.

Der Bus TRACEBUS umfaßt im betrachteten Beispiel 32 Leitungen, kann grundsätzlich aber auch mehr oder weniger Leitungen umfassen. Der Vollständigkeit halber sei darauf hingewiesen, daß anstelle des Busses TRACEBUS auch eine entsprechende Anzahl von einzelnen Leitungen vorgesehen sein kann.

Über den Bus TRACEBUS werden den Debug-Ressourcen DRC von den Komponenten PGEC Signale zugeführt, welche die Debug-Ressourcen DR beim Eintreten bestimmter Ereignisse aus der programmgesteuerten Einheit ausgeben. Die besagten Signale sind im betrachteten Beispiel Steuersignale, die innerhalb der einzelnen Komponenten der Komponenten PGEC oder zwischen einzelnen oder mehreren Komponenten der Komponenten PGEC, also beispielsweise innerhalb des Core, oder innerhalb einer Peripherieeinheit, oder zwischen dem Core und einer Peripherieeinheit transferiert werden. Zu den besagten Signalen gehören beispielsweise, aber bei weitem nicht ausschließlich Interrupt-Request-Signale, Störungen oder Fehler signalisierende Signale, Ready-Signale etc. Über den Bus TRACEBUS können den Debug-Ressourcen DRC aber auch Adressen oder Daten zugeführt werden, beispielsweise eine Speicheradresse, von welcher gerade Daten gelesen werden, und/oder aus einer Speichereinrichtung ausgelesene Daten, und/oder der Inhalt bestimmter Register wie etwa den Instruction Pointer, etc.

Über die Steuerleitungen CTRL kann zumindest für bestimmte Leitungen des Busses TRACEBUS eingestellt werden, welches Signal auf eine jeweilige Busleitung gegeben wird. Dadurch ist es beispielsweise möglich, auf eine bestimmte Busleitung wahlweise ein Interrupt-Request-Signal von einer ersten Peripherieeinheit, oder ein Interrupt-Request-Signal von einer zweiten Peripherieeinheit, oder ein Ready-Signal der ersten Peripherieeinheit zu geben. Dies erweist sich als vorteilhaft, weil dadurch aus beliebig vielen Signalen ausgewählt werden kann, welche Signale den Debug-Ressourcen DRC zugeführt werden.

Die Debug-Ressourcen DRC enthalten einen Trace-Teil TRACE und einen Watchpoint-Teil WATCHPOINT, wobei beide Teile mit dem Bus TRACEBUS verbunden sind.

Der Trace-Teil TRACE legt fest, wann welche der ihm über den Bus TRACEBUS zugeführte Adressen, Daten und/oder Steuersignale als Trace-Informationen aus der programmgesteuerten Einheit ausgegeben werden.

Der Watchpoint-Teil WATCHPOINT überwacht das Eintreten bestimmter Bedingungen in den ihm über den Bus TRACEBUS zugeführten Adressen, Daten und/oder Steuersignalen und gibt beim Eintreten dieser Bedingungen ein diesen Umstand signalisierendes Signal an den Trace-Teil TRACE und/oder aus der programmgesteuerten Einheit aus.

Der Trace-Teil TRACE besteht aus einer Maskiereinheit MU, einem Register R, einer ersten Bedingungsspeichereinrichtung B1, einer zweiten Bedingungsspeichereinrichtung B2, einer Vergleichslogik CU, einem Multiplexer MUX, einem Message-Generator MGEN und einem Message-FIFO MFIFO.

Die dem Trace-Teil TRACE über den Bus TRACEBUS zugeführten Signale gelangen in die Maskiereinheit MU, in welcher nicht interessierende Signale ausgeblendet werden. Das Ausblenden besteht im betrachteten Beispiel darin, daß die nicht interessierenden Signale auf den Wert 0 gesetzt werden. Der Vollständigkeit halber sei angemerkt, daß die nicht interessierenden Signale auch auf den Wert 1 gesetzt werden könnten. Welches die nicht interessierenden Signale sind, wird der Maskiereinheit MU über in der Figur 1 nicht gezeigte Steuerleitungen von einer außerhalb der programmgesteuerten Einheit vorgesehenen Einrichtung vorgegeben.

Die Ausgangssignale der Maskiereinheit MU werden dem Register R zugeführt, welches die ihm zugeführten Signale in bestimmten zeitlichen Abständen, beispielsweise im Takt des Systemtaktes der programmgesteuerten Einheit übernimmt und zwischenspeichert.

Die im Register R gespeicherten Daten werden der Vergleichslogik CU und dem Multiplexer MUX zugeführt.

Die Vergleichslogik CU vergleicht diese Daten bitweise mit den zuvor vom Register R erhaltenen Daten oder den zuletzt aus der programmgesteuerten Einheit ausgegebenen Trace-Informationen, und überprüft zusätzlich, ob die festgestellten Unterschiede Änderungen der betreffenden Bits in eine bestimmte Richtung darstellen, genauer gesagt, ob im zeitlichen Verlauf der betreffenden Bits eine vorgegebene Flanke auftrat.

Die vorgegebenen Flanken sind in der ersten Bedingungsspeichereinrichtung B1 und in der zweiten Bedingungsspeichereinrichtung B2 gespeichert.

In der ersten Bedingungsspeichereinrichtung B1 ist gespeichert, welche Bits gleichzeitig eine steigende Flanke, d.h. einen Wechsel vom Wert 0 auf den Wert 1 aufweisen müssen, damit die Vergleichslogik CU ein positives Vergleichsergebnis ausgibt; in der zweiten Bedingungsspeichereinrichtung B2 ist gespeichert, welche Signale zusätzlich eine fallende Flanke, d.h. einen Wechsel vom Wert 1 auf den Wert 0 aufweisen müssen, damit die Vergleichslogik CU ein positives Vergleichsergebnis ausgibt.

Die Bedingungsspeichereinrichtungen B1 und B2 sind über in der Figur 1 nicht gezeigte Leitungen mit einer außerhalb der programmgesteuerten Einheit vorgesehenen Einrichtung verbunden; über diese externe Einrichtung ist in den Bedingungsspeichereinrichtungen B1 und B2 einstellbar, welche Bits welche Flanken aufweisen müssen, damit die Vergleichslogik CU ein positives Vergleichsergebnis ausgibt.

Die Vergleichslogik CU gibt ein positives, d.h. ein eine Übereinstimmung signalisierendes Vergleichsergebnis aus, wenn die in der ersten Bedingungsspeichereinrichtung B1 festgelegten Bits ihren Wert von 0 auf 1 geändert haben, und gleichzeitig die in der zweiten Bedingungsspeichereinrichtung B2 festgelegten Bits ihren Wert von 1 auf 0 geändert haben.

Das Vergleichsergebnis der Vergleichslogik CU wird an den Message-Generator MGEN ausgegeben.

Der vorstehend bereits erwähnte Multiplexer MUX wird als eine Datenumsetzungseinrichtung verwendet, wobei die Datenumsetzungseinrichtung jedoch auch anders als durch einen Multiplexer realisiert werden könnte. Der Multiplexer MUX leitet die vom Register R erhaltenen Daten sequentiell an den Message-Generator MGEN weiter, und kann dabei die Positionen der Bits innerhalb der Daten verändern. D.h., er kann beispielsweise ein Bit, das innerhalb der vom Register R ausgegebenen Daten an einer Position X steht, als y-tes Bit an den Message-Generator MGEN ausgeben, wodurch das betreffende Bit innerhalb der vom Message-Generator MGEN erhaltenen Daten an einer Position Y steht. Im Idealfall kann jedes Bit der vom Register R erhaltenen Daten an eine beliebige andere Stelle innerhalb der an den Message-Generator MGEN ausgegebenen Daten versetzt werden. Dies kann, wie nachfolgend noch genauer erläutert wird, bei der im Message-Generator MGEN erfolgenden Message-Generierung von Vorteil sein. Vorzugsweise werden zumindest die durch die Maskiereinheit MU ausmaskierten Daten an den Beginn oder an das Ende der an den Message-Generator ausgegebenen Daten versetzt. Dadurch kann, wie später noch besser verstanden werden wird, die zur Ausgabe der auszugebenden Trace-Informationen aus der programmgesteuerten Einheit auszugebende Datenmenge reduziert werden.

Der Multiplexer MUX wird über in der Figur 1 nicht gezeigte Steuerleitungen von einer außerhalb der programmgesteuerten Einheit vorgesehenen Einrichtung gesteuert.

Die vom Multiplexer MUX ausgegebenen Daten werden dem Message Generator MGEN zugeführt.

Der Message-Generator MGEN stellt Messages zusammen, durch welche die ihm vom Multiplexer zugeführten Daten, welches die aus der programmgesteuerten Einheit auszugebenden Trace-Informationen sind, aus der programmgesteuerten Einheit ausgegeben werden.

Der Message-Generator MGEN arbeitet abhängig von dem ihm von der Vergleichslogik CU zugeführten Vergleichsergebnis. Im betrachteten Beispiel wird der Message-Generator MGEN durch ein positives Vergleichsergebnis dazu veranlaßt,
- eine einzelne Message, oder eine bestimmte Anzahl von Messages oder eine unbestimmte Anzahl von Messages auszugeben, oder
- die Ausgabe von Messages zu beenden.

Einzelne, mehrere oder alle diese Aktionen können auch durch ein negatives Vergleichsergebnis, oder durch den Wechsel von einem positiven Vergleichsergebnis zu einem negativen Vergleichsergebnis, oder durch den Wechsel von einem negativen Vergleichsergebnis zu einem positiven Vergleichsergebnis ausgelöst werden.

Die vom Message-Generator MGEN zusammengestellten Messages bestehen aus einem Header und einem die Trace-Informationen enthaltenden Teil. Der die Trace-Informationen enthaltende Teil weist im betrachteten Beispiel eine variable Länge auf; diejenigen Teile der Trace-Informationen, die sich außerhalb der programmgesteuerten Einheit zweifelsfrei rekonstruieren lassen, werden nicht aus der programmgesteuerten Einheit ausgegeben, wodurch die Message (der die Trace-Informationen enthaltende Teil derselben) kürzer wird und dementsprechend schneller aus der programmgesteuerten Einheit ausgegeben werden kann.

Da die auszugebenden Trace-Informationen im betrachteten Beispiel 32 Signale umfassen, sind für den die Trace-Informationen enthaltenden Teil einer Message 32 Bits reserviert. Der die Trace-Informationen enthaltenden Teil einer Message ist im betrachteten Beispiel aber häufig kürzer. Dies wird vorliegend dadurch erreicht, daß
- entweder Nullen, die bei der Übertragung aller Trace-Informationen am Anfang des die Trace-Informationen enthaltenden Teils einer Message vorhanden wären,
- oder Einsen, die bei der Übertragung aller Trace-Informationen am Anfang des die Trace-Informationen enthaltenden Teils einer Message vorhanden wären,
- oder Nullen, die bei der Übertragung aller Trace-Informationen am Ende des die Trace-Informationen enthaltenden Teils einer Message vorhanden wären,
- oder Einsen, die bei der Übertragung aller Trace-Informationen am Ende des die Trace-Informationen enthaltenden Teils einer Message vorhanden wären,
   nicht in den die Trace-Informationen enthaltenden Teil der betreffenden Message aufgenommen werden. Dadurch wird der die Trace-Informationen enthaltende Teil einer Message häufig kürzer als 32 Bits, und kann in kürzerer Zeit übertragen werden als es der Fall wäre, wenn der die Trace-Informationen enthaltende Teil einer Message stets die selbe Länge aufweisen würde.

Wie vorstehend bereits angedeutet wurde, ist es durch den Multiplexer MUX möglich, die den Debug-Ressourcen zugeführten Signale innerhalb der Debug-Ressourcen so umzuverteilen, daß Messages mit minimaler Länge zu erwarten sind. Wenn beispielsweise Nullen, die bei der Ausgabe aller Trace-Informationen am Anfang des die Trace-Informationen enthaltenden Teils einer Message vorhanden wären, nicht in den die Trace-Informationen enthaltenden Teil der betreffenden Message aufgenommen werden, so werden die den Debug-Ressourcen zugeführten Signale vorzugsweise so umverteilt, daß die dem Message-Generator zugeführten Trace-Informationen in dem Bereich, der bei der Ausgabe aller Trace-Informationen am Anfang des die Trace-Informationen enthaltenden Teils einer Message zu liegen käme, diejenigen Adressen, Daten, und/oder Steuersignale enthalten sind, die durch die Maskiereinheit MU ausmaskiert wurden oder die meiste Zeit den Wert 0 aufweisen.

Alternativ kann vorgesehen werden, daß die Ausgabe der auszugebenden Trace-Informationen nicht durch die Ausgabe der auszugebenden Adressen, Daten und/oder Steuersignale selbst, sondern durch die Ausgabe von Daten erfolgt, die die Veränderungen der jeweils aktuellen Adressen, Daten und/oder Steuersignale gegenüber den Adressen, Daten und/oder Steuersignalen repräsentieren, die den zuletzt ausgegebenen Trace-Informationen zugrundelagen. Die in diesem Fall zu übertragenden Daten können durch eine XOR-Verknüpfung der aktuellen Adressen, Daten und/oder Steuersignale mit den Adressen, Daten und/oder Steuersignalen ermittelt werden, die den zuletzt ausgegebenen Trace-Informationen zugrundelagen. Auch hierbei kann selbstverständlich von der vorstehend beschriebenen Möglichkeit Gebrauch gemacht werden, daß Nullen oder Einsen, die bei der Ausgabe aller Trace-Informationen am Anfang oder am Ende des die Trace-Informationen enthaltenden Teils einer Message vorhanden wären, nicht in die Message aufgenommen werden. Dabei kann sich jedoch eine andere Umverteilung der Daten durch den Multiplexer MUX als vorteilhaft erweisen.

Unabhängig von alledem kann es sich als vorteilhaft erweisen, wenn den Messages zumindest teilweise Informationen (Time Stamps) hinzugefügt werden, die angeben, zu welchen Zeitpunkten die in der Message enthaltenen Trace-Informationen, genauer gesagt die diesen zugrundeliegenden Adressen, Daten und/oder Steuersignale in der programmgesteuerten Einheit zu beobachten waren.

Vom Message-Generator MGEN erzeugte Messages werden in das Message-FIFO MFIFO geschrieben, von wo sie in der Reihenfolge, in welcher sie in das Message-FIFO geschrieben wurden, auf einen Bus MBUS ausgegeben und über diesen aus der programmgesteuerten Einheit ausgegeben werden.

Der Watchpoint-Teil WATCHPOINT der Debug Ressourcen DRC besteht aus einer Logik L, einem Message-Generator MGEN2, und einem Message-FIFO MFIFO2.

Die dem Watchpoint-Teil WATCHPOINT über den Bus TRACEBUS zugeführten Signale gelangen in die Logik L, welche überprüft, ob die Signale vorgegebene Bedingungen erfüllen.

Die Logik L besteht im betrachteten Beispiel aus einer Invertierungseinrichtung IU, einer Maskiereinheit MU2, und einer Verknüpfungseinheit VU, welche in der genannten Reihenfolge hintereinander angeordnet sind. Es sei bereits an dieser Stelle darauf hingewiesen, daß die Logik L auch weitere und/oder andere Komponenten enthalten kann, und daß die Komponenten auch beliebig anders verschaltet sein können. Der Aufbau der Logik L hängt von den Bedingungen ab, die durch die Logik L überprüfbar sein sollen.

Durch die Invertierungseinrichtung IU werden ein, mehrere oder alle Bits der der Invertierungseinrichtung zugeführten Bits invertiert. Welche Bits invertiert werden, ist in der Invertierungseinrichtung IU durch eine außerhalb der programmgesteuerten Einheit vorgesehene Einrichtung über in der Figur 1 nicht gezeigte Steuerleitungen einstellbar.

Die von der Invertierungseinrichtung IU erzeugten Daten werden an die Maskiereinheit MU2 weitergeleitet. Durch die Maskiereinheit MU2 werden nicht interessierende Bits ausgeblendet. Das Ausblenden besteht im betrachteten Beispiel darin, daß die nicht interessierenden Signale auf den Wert 0 gesetzt werden. Der Vollständigkeit halber sei angemerkt, daß die nicht interessierenden Signale auch auf den Wert 1 gesetzt werden könnten. Welches die nicht interessierenden Signale sind, wird der Maskiereinheit MU2 über in der Figur 1 nicht gezeigte Steuerleitungen von einer außerhalb der programmgesteuerten Einheit vorgesehenen Einrichtung vorgegeben.

Die Ausgangssignale der Maskiereinheit MU2 werden der Verknüpfungseinheit VU zugeführt. Die Verknüpfungseinheit VU unterzieht ausgewählte Bits der ihr zugeführten Daten bestimmten logischen Verknüpfungen. Die logischen Verknüpfungen sind im betrachteten Beispiel UND-Verknüpfungen und/oder ODER-Verknüpfungen. Zusätzlich oder alternativ können aber auch beliebige andere Verknüpfungen durchgeführt werden, beispielsweise NAND-, NOR-, XOR-Verküpfungen etc. Welche Bits wie verknüpft werden sollen, wird der Verknüpfungseinheit VU über in der Figur 1 nicht gezeigte Steuerleitungen von einer außerhalb der programmgesteuerten Einheit vorgesehenen Einrichtung vorgegeben.

Das von der Verknüpfungseinheit VU ausgegebene Ergebnis besteht aus einem einzigen Bit, dessen Wert angibt, ob die durch den Watchdog-Teil WATCHDOG zu überprüfende Bedingung erfüllt ist oder nicht.

Es könnte auch vorgesehen werden, daß durch eine entsprechend aufgebaute Logik gleichzeitig mehrere Bedingungen überprüft werden. In diesem Fall würde das von der Verknüpfungseinheit VU ausgegebene Ergebnis mehrere Bits umfassen; diese mehreren Bits könnten anzeigen, ob und gegebenenfalls welche Bedingung oder Bedingungen jeweils erfüllt sind.

Das Ausgangssignal der Verknüpfungseinheit VU ist zugleich das Ausgangssignal der Logik L und wird dem Message-Generator MGEN2 zugeführt.

Der Message-Generator MGEN2 generiert immer dann, wenn ihm durch das ihm zugeführte Signal signalisiert wird, daß die zu überwachende Bedingung erfüllt ist, eine Message, die wie im Trace-Teil TRACE über ein Message-FIFO MFIFO2 und den Bus MBUS aus der programmgesteuerten Einheit ausgegeben wird; wenn und so lange die Bedingung nicht erfüllt ist, wird keine Message generiert und ausgegeben. Durch die Message wird einer außerhalb der programmgesteuerten Einheit vorgesehenen Einrichtung signalisiert, ob und gegebenenfalls welche der zu überwachenden Bedingungen gerade erfüllt ist.

Einzelnen, mehreren oder allen der vom Message-Generator MGEN2 generierten Messages können wie den vom Message-Generator MGEN generierten Messages Time Stamps hinzugefügt werden.

Das Ausgangssignal der Verknüpfungseinheit VU wird im betrachteten Beispiel auch dem Trace-Teil zugeführt und kann dort je nach den jeweiligen Bedürfnissen auf die unterschiedlichste Art und Weise verwendet werden. Denkbare Verwendungsmöglichkeiten für das Ausgangssignal der Verknüpfungseinheit VU bestehen beispielsweise darin, daß abhängig vom Ausgangssignal
- die Ausgabe einer Message durch den Trace-Teil veranlaßt oder freigegeben wird, oder
- die Ausgabe einer bestimmten anderen Anzahl von Messages durch den Trace-Teil veranlaßt oder freigegeben wird, oder
- die Ausgabe einer unbestimmten Anzahl von Messages durch den Trace-Teil veranlaßt oder freigegeben wird, oder
- die Ausgabe von Messages durch den Trace-Teil gestoppt oder gesperrt wird, und/oder
- die Einstellungen der Trace-Teil-Komponenten, insbesondere der Maskiereinheit MU, der Vergleichslogik CU, der Bedingungsspeichereinrichtungen B1 und B2, des Multiplexers MUX und/oder des Message-Generators MGEN verändert werden.

Die beschriebene programmgesteuerte Einheit, genauer gesagt die Debug-Ressourcen derselben, ermöglichen es unabhängig von den Einzelheiten der praktischen Realisierung, zur Beobachtung der innerhalb der programmgesteuerten Einheit ablaufenden Vorgänge benötigte Trace-Informationen mit geringem Aufwand umfassend auszugeben.

## Patentansprüche

1. Programmgesteuerte Einheit, mit Debug-Ressourcen (DRC), durch welche ausgewählte Adressen, Daten, und/oder Steuersignale umfassende Trace-Informationen, mit Hilfe welcher sich der Verlauf der innerhalb der programmgesteuerten Einheit ablaufenden Vorgänge verfolgen läßt, aus der programmgesteuerten Einheit ausgegeben werden,
**dadurch gekennzeichnet,**
**daß** die Debug-Ressourcen überwachen, ob eine vorgegebene Veränderung des Pegels eines oder mehrerer vorgegebener Bits der von den Trace-Informationen umfaßten Adressen, Daten, und/oder Steuersignale erfolgt ist, und abhängig vom Ergebnis dieser Überprüfung die Generierung von Trace-Informationen starten oder beenden.

2. Programmgesteuerte Einheit, mit Debug-Ressourcen (DRC), durch welche ausgewählte Adressen, Daten, und/oder Steuersignale umfassende Trace-Informationen, mit Hilfe welcher sich der Verlauf der innerhalb der programmgesteuerten Einheit ablaufenden Vorgänge verfolgen läßt, aus der programmgesteuerten Einheit ausgegeben werden,
**dadurch gekennzeichnet,**
**daß** die ausgegebenen Trace-Informationen Bestandteil von Messages sind, bei welchen die Länge des die Trace-Informationen enthaltenden Teils variabel ist.

3. Programmgesteuerte Einheit, mit Debug-Ressourcen (DRC), durch welche ausgewählte Adressen, Daten, und/oder Steuersignale umfassende Trace-Informationen, mit Hilfe welcher sich der Verlauf der innerhalb der programmgesteuerten Einheit ablaufenden Vorgänge verfolgen läßt, aus der programmgesteuerten Einheit ausgegeben werden,
**dadurch gekennzeichnet,**
**daß** die ausgegebenen Trace-Informationen Bestandteil von Messages sind, wobei es einstellbar ist, welche Trace-Information an welcher Stelle innerhalb der Message zu stehen kommt.

4. Programmgesteuerte Einheit nach einem der vorhergehenden Ansprüche,
**dadurch gekennzeichnet,**
**daß** die ausgegebenen Trace-Informationen aus den ausgewählten Adressen, Daten und/oder Steuersignalen bestehen.

5. Programmgesteuerte Einheit nach einem der vorhergehenden Ansprüche,
**dadurch gekennzeichnet,**
**daß** die ausgegebenen Trace-Informationen aus Daten bestehen, die die Veränderungen der aktuellen Werte der ausgewählten Adressen, Daten und/oder Steuersignale gegenüber den Werten der ausgewählten Adressen, Daten und/oder Steuersignale repräsentieren, welche den zuletzt ausgegebenen Trace-Informationen zugrundelagen.

6. Programmgesteuerte Einheit nach einem der vorhergehenden Ansprüche,
**dadurch gekennzeichnet,**
**daß** die Trace-Informationen Steuersignale umfassen, die innerhalb oder zwischen Komponenten (C, P1, P2, P3, S1, S2, S3; PGEC) der programmgesteuerten Einheit transferiert werden.

7. Programmgesteuerte Einheit nach Anspruch 6,
**dadurch gekennzeichnet,**
**daß** die Trace-Informationen Interrupt-Request-Signale umfassen.

8. Programmgesteuerte Einheit nach Anspruch 6,
**dadurch gekennzeichnet,**
**daß** die Trace-Informationen Signale umfassen, durch welche das Auftreten eines Fehlers signalisiert wird.

9. Programmgesteuerte Einheit nach Anspruch 6,
**dadurch gekennzeichnet,**
**daß** die Trace-Informationen Signale umfassen, durch welche die erfolgreiche Durchführung einer Aktion signalisiert wird.

10. Programmgesteuerte Einheit nach einem der vorhergehenden Ansprüche,
**dadurch gekennzeichnet,**
**daß** die Debug-Ressourcen (DRC) Eingangsanschlüsse aufweist, über welche ihnen die Adressen, Daten, und/oder Steuersignale zugeführt werden, die von den auszugebenden Trace-Informationen umfaßt sein sollen, wobei von außerhalb der programmgesteuerten Einheit einstellbar ist, welche Adressen, Daten, und/oder Steuersignale den Eingangsanschlüssen zugeführt werden.

11. Programmgesteuerte Einheit nach einem der vorhergehenden Ansprüche,
**dadurch gekennzeichnet,**
**daß** die Debug-Ressourcen (DRC) eine Maskiereinheit (MU) enthalten, durch welche nicht zu berücksichtigende Adressen, Daten, und/oder Steuersignale unter den den Debug-Ressourcen zugeführten Adressen, Daten und/oder Steuersignalen ausblendbar sind.

12. Programmgesteuerte Einheit nach Anspruch 11,
**dadurch gekennzeichnet,**
**daß** von außerhalb der programmgesteuerten Einheit einstellbar ist, welche Adresse, Daten, und/oder Steuersignale ausgeblendet werden sollen.

13. Programmgesteuerte Einheit nach einem der vorhergehenden Ansprüche,
**dadurch gekennzeichnet,**
**daß** die Debug-Ressourcen (DRC) eine Vergleichslogik (CU) enthalten, durch welche überprüft wird, ob eine vorgegebene Veränderung des Pegels eines oder mehrerer vorgegebener Bits der den Debug-Ressourcen zugeführten Adressen, Daten, und/oder Steuersignale vorliegt.

14. Programmgesteuerte Einheit nach Anspruch 15,
**dadurch gekennzeichnet,**
**daß** durch die vorgegebenen Veränderungen festgelegt wird, welche Bits der den Debug-Ressourcen (DRC) zugeführten Adressen, Daten, und/oder Steuersignale ihren Pegel wie ändern müssen, damit die Vergleichslogik (CU) ein positives Vergleichsergebnis ausgibt.

15. Programmgesteuerte Einheit nach Anspruch 13 oder 14,
**dadurch gekennzeichnet,**
**daß** die vorgegebenen Veränderungen von außerhalb der programmgesteuerten Einheit einstellbar ist.

16. Programmgesteuerte Einheit nach einem der vorhergehenden Ansprüche,
**dadurch gekennzeichnet,**
**daß** die Debug-Ressourcen (DRC) einen Message-Generator (MGEN) umfassen, welcher eine die auszugebenden Trace-Informationen enthaltende Message generiert und deren Ausgabe aus der programmgesteuerten Einheit veranlaßt.

17. Programmgesteuerte Einheit nach Anspruch 16,
**dadurch gekennzeichnet,**
**daß** die Länge des die Trace-Informationen enthaltenden Teils der Messages variabel ist.

18. Programmgesteuerte Einheit nach Anspruch 16 oder 17,
**dadurch gekennzeichnet,**
**daß** die Länge des die Trace-Informationen enthaltenden Teils der Messages vom Inhalt der auszugebenden Trace-Informationen abhängt.

19. Programmgesteuerte Einheit nach Anspruch 17 oder 18,
**dadurch gekennzeichnet,**
**daß** der die Trace-Informationen enthaltende Teil der Messages nur einen Teil der eigentlich auszugebenden Trace-Informationen enthält.

20. Programmgesteuerte Einheit nach einem der Ansprüche 17 bis 19,
**dadurch gekennzeichnet,**
**daß** Trace-Informationen, die außerhalb der programmgesteuerten Einheit rekonstruierbar sind, nicht aus der programmgesteuerten Einheit ausgegeben werden.

21. Programmgesteuerte Einheit nach Anspruch 20,
**dadurch gekennzeichnet,**
**daß** Nullen, die bei der Übertragung aller Trace-Informationen am Anfang des die Trace-Informationen enthaltenden Teils einer Message vorhanden wären, nicht in den die Trace-Informationen enthaltenden Teil der betreffenden Message aufgenommen werden.

22. Programmgesteuerte Einheit nach Anspruch 20,
**dadurch gekennzeichnet,**
**daß** Einsen, die bei der Übertragung aller Trace-Informationen am Anfang des die Trace-Informationen enthaltenden Teils einer Message vorhanden wären, nicht in den die Trace-Informationen enthaltenden Teil der betreffenden Message aufgenommen werden.

23. Programmgesteuerte Einheit nach Anspruch 20,
**dadurch gekennzeichnet,**
**daß** Nullen, die bei der Übertragung aller Trace-Informationen am Ende des die Trace-Informationen enthaltenden Teils einer Message vorhanden wären, nicht in den die Trace-Informationen enthaltenden Teil der betreffenden Message aufgenommen werden.

24. Programmgesteuerte Einheit nach Anspruch 20,
**dadurch gekennzeichnet,**
**daß** Einsen, die bei der Übertragung aller Trace-Informationen am Ende des die Trace-Informationen enthaltenden Teils einer Message vorhanden wären, nicht in den die Trace-Informationen enthaltenden Teil der betreffenden Message aufgenommen werden.

25. Programmgesteuerte Einheit nach einem der vorhergehenden Ansprüche,
**dadurch gekennzeichnet,**
**daß** die Debug-Ressourcen (DRC) eine Umsetzungseinrichtung (MUX) enthalten, welche die Bits innerhalb der den Debug-Ressourcen zugeführten, die ausgewählten Adressen, Daten und/oder Steuersignale repräsentierenden Daten in eine vorgegebene andere Reihenfolge umsetzt.

26. Programmgesteuerte Einheit nach Anspruch 25,
**dadurch gekennzeichnet,**
**daß** die vorgegebene Reihenfolge durch eine außerhalb der programmgesteuerten Einheit vorgesehene Einrichtung einstellbar ist.

27. Programmgesteuerte Einheit nach einem der Ansprüche 16 bis 26,
**dadurch gekennzeichnet,**
**daß** der Message-Generator (MGEN) abhängig vom dem von der Vergleichslogik (CU) ausgegebenen Ergebnis arbeitet.

28. Programmgesteuerte Einheit nach Anspruch 27,
**dadurch gekennzeichnet,**
**daß** der Message-Generator (MGEN) die Ausgabe einer einzelnen Message veranlaßt, wenn durch das von der Vergleichslogik (CU) ausgegebene Ergebnis signalisiert wird, daß die von der Vergleichslogik zu überprüfende Bedingung erfüllt ist.

29. Programmgesteuerte Einheit nach Anspruch 27,
**dadurch gekennzeichnet,**
**daß** der Message-Generator (MGEN) die Ausgabe einer bestimmten Anzahl von Messages veranlaßt, wenn durch das von der Vergleichslogik (CU) ausgegebene Ergebnis signalisiert wird, daß die von der Vergleichslogik zu überprüfende Bedingung erfüllt ist.

30. Programmgesteuerte Einheit nach Anspruch 27,
**dadurch gekennzeichnet,**
**daß** der Message-Generator (MGEN) die Ausgabe einer unbestimmten Anzahl von Messages veranlaßt, wenn durch das von der Vergleichslogik (CU) ausgegebene Ergebnis signalisiert wird, daß die von der Vergleichslogik zu überprüfende Bedingung erfüllt ist.

31. Programmgesteuerte Einheit nach Anspruch 27,
**dadurch gekennzeichnet,**
**daß** der Message-Generator (MGEN) die Ausgabe von Messages beendet, wenn durch das von der Vergleichslogik (CU) ausgegebene Ergebnis signalisiert wird, daß die von der Vergleichslogik zu überprüfende Bedingung erfüllt ist.

32. Programmgesteuerte Einheit nach Anspruch 27,
**dadurch gekennzeichnet,**
**daß** der Message-Generator (MGEN) die Ausgabe einer einzelnen Message veranlaßt, wenn durch das von der Vergleichslogik (CU) ausgegebene Ergebnis signalisiert wird, daß die von der Vergleichslogik zu überprüfende Bedingung nicht erfüllt ist.

33. Programmgesteuerte Einheit nach Anspruch 27,
**dadurch gekennzeichnet,**
**daß** der Message-Generator (MGEN) die Ausgabe einer bestimmten Anzahl von Messages veranlaßt, wenn durch das von der Vergleichslogik (CU) ausgegebene Ergebnis signalisiert wird, daß die von der Vergleichslogik zu überprüfende Bedingung nicht erfüllt ist.

34. Programmgesteuerte Einheit nach Anspruch 27,
**dadurch gekennzeichnet,**
**daß** der Message-Generator (MGEN) die Ausgabe einer unbestimmten Anzahl von Messages veranlaßt, wenn durch das von der Vergleichslogik (CU) ausgegebene Ergebnis signalisiert wird, daß die von der Vergleichslogik zu überprüfende Bedingung nicht erfüllt ist.

35. Programmgesteuerte Einheit nach Anspruch 27,
**dadurch gekennzeichnet,**
**daß** der Message-Generator (MGEN) die Ausgabe von Messages beendet, wenn durch das von der Vergleichslogik (CU) ausgegebene Ergebnis signalisiert wird, daß die von der Vergleichslogik zu überprüfende Bedingung nicht erfüllt ist.

36. Programmgesteuerte Einheit nach einem der Ansprüche 16 bis 35,
**dadurch gekennzeichnet,**
**daß** die Messages eine Information über den Zeitpunkt enthalten, zu welchem die von den Trace-Informationen umfaßten Adressen, Daten und/oder Steuersignale in der programmgesteuerten Einheit auftraten.

37. Programmgesteuerte Einheit nach einem der vorhergehenden Ansprüche,
**dadurch gekennzeichnet,**
**daß** der die auszugebenden Trace-Informationen zusammenstellende Teil (TRACE) der Debug-Ressourcen (DRC) und/oder der die Trace-Informationen ausgebende Teil (TRACE) der Debug-Ressourcen abhängig von einem Signal arbeiten, das von einer Watchdog-Einheit (WATCHPOINT) der Debug-Ressourcen ausgegeben wird und signalisiert, ob eine von der Watchdog-Einheit zu überprüfende Bedingung erfüllt ist oder nicht.

38. Programmgesteuerte Einheit nach Anspruch 37,
**dadurch gekennzeichnet,**
**daß** die von der Watchdog-Einheit (WATCHPOINT) durchgeführte Überprüfung darin besteht, daß überprüft wird, ob die von den Trace-Informationen umfaßten Adressen, Daten und/oder Steuersignale einen bestimmten Zustand innehaben.

39. Programmgesteuerte Einheit nach einem der vorhergehenden Ansprüche,
**dadurch gekennzeichnet,**
**daß** die auszugebenden Trace-Informationen vor deren Ausgabe aus der programmgesteuerten Einheit in dieser gespeichert werden.

40. Programmgesteuerte Einheit nach Anspruch 39,
**dadurch gekennzeichnet,**
**daß** die Ausgabe der in der programmgesteuerten Einheit gespeicherten Trace-Informationen auf eine entsprechende Aufforderung seitens einer außerhalb der programmgesteuerten Einheit vorgesehenen Einrichtung hin erfolgt.
